# EUROPEAN PATENT APPLICATION

(11) **EP 4 814 739 A1**
(43) Date of publication of application: **30.09.2026**
(21) Application number: 26168494.8
(22) Date of filing: 27.03.2026
(51) Int. Cl.: G06F 16/23, G06F 16/27, G06F 16/215

(54) **HORIZONTALLY PARTITIONABLE REFERENCE COUNTING SYSTEM**

(30) Priority: 28.03.2025 US 202519093512
(71) Applicant: Google LLC, Mountain View, CA 94043 (US)
(72) Inventor: Wang, Xinyuan, Mountain View, California, 94043 (US); Tian, Rui, Mountain View, California, 94043 (US); Szymaniak, Michal P., Mountain View, California, 94043 (US); Anand, Anupama, Mountain View, California, 94043 (US); Gandhi, Mihir Jayant, Mountain View, California, 94043 (US); Xue, Siyang, Mountain View, California, 94043 (US); Batta, Puneet, Mountain View, California, 94043 (US); Gadde, Ravi, Los Altos, California, 94024 (US); Serenyi, Denis, Mountain View, California, 94043 (US)
(74) Representative: Betten & Resch

(57) **Abstract**

The present application relates to systems and methods for efficiently managing a data storage. The database may be a distributed database in which objects include references to a plurality of distributed data chunks. These data chunks can be referenced by a plurality of objects, and the system is configured to efficiently identify when one or more data chunks are no longer referenced by any object within the system. The system can be configured to have a two-layer architecture in which back-references for the data chunks are collected and a total count of back-references are determined. These two-layers can be based on an incremental identification of back-references, and each layer can be horizontally partitioned.

## Description

### BACKGROUND

Data storage systems can be configured to be a distributed data system, in which objects are divided into a set of smaller data slices, and these data slices can be used by multiple objects. The data slices within the system should correspond to one or more active objects, however as the data storage systems have grown, it has become more difficult to efficiently and accurately maintain these data slices as objects within the system are created, deleted, or otherwise altered.

### BRIEF SUMMARY

What is needed is a scalable data storage system that is configured to efficiently manage distributed data within the system, even as objects are created, deleted, or otherwise altered. The present application relates to systems and methods for managing a distributed database in which objects include references to a plurality of distributed data chunks. Data chunks can be referenced by a plurality of objects. The system is configured to efficiently identify when one or more data chunks are no longer referenced by any object within the system. The system can be configured to have a two-layer architecture in which back-references from data chunks to objects are collected and a total count of back-references are determined. These two-layers can be based on an incremental identification of back-references, and each layer can be horizontally partitioned.

In accordance with aspects of the disclosure, a system for database maintenance may include: memory having metadata for a plurality of objects that each reference one or more data chunks within a database; one or more processors that are configured to: identify one or more incremental changes in references to one or more identified data chunks within the metadata; add or delete an entry within a chunk-reference table based on the identified one or more incremental changes; alter a reference count for the one or more identified data chunks within a reference-count table based on the chunk-reference table; and identify whether any entry within the reference-count table has a reference count of zero.

In accordance with other aspects of the disclosure, the metadata for the plurality of objects may further include a plurality of metadata inputs, and the one or more processors may be further configured to identify one or more incremental changes in references to one or more identified data chunks with respect to each of the plurality of metadata inputs.

In still other aspects of the disclosure, the chunk-reference table may further include a plurality of chunk-reference tables, and each of the plurality of chunk-reference tables may contain entries relating to one of the plurality of metadata inputs.

In yet other aspects of the disclosure, the reference-count table may further include a plurality of reference-count tables, and each of the reference-count tables may correspond to a predetermined range of entries within each of the plurality of chunk-reference tables. In addition, the predetermined range of entries may be based on Chunk IDs associated with each of the data chunks.

In other aspects of the disclosure, the data chunks may be aggregated into data groups, which can be referred to as shards, and each data chunk be assigned a Chunk ID based at least in part on the data group in which the data chunk is aggregated.

In still other aspects of the disclosure, the one or more processors may be further configured to provide a command to delete one or more identified data chunks from one or more databases based on determining that the one or more identified data chunks have a reference count of zero.

In yet other aspects of the disclosure, the one or more incremental changes in references may be based at least in part on timestamped changes to one or more objects.

In other aspects of the disclosure, the metadata may include a change-log for the plurality of objects.

In still other aspects of the disclosure, the one or more processors may be further configured to update one or more data groups for the one or more of the data chunks based at least in part on the reference count for the one or more identified data chunks.

In other aspects of the disclosure, a method for database maintenance may include: accessing, by one or more processors, a memory having metadata for a plurality of objects that each reference one or more data chunks within a database; identifying, but the one more processors, one or more incremental changes in references to one or more identified data chunks within the metadata; adding or deleting, by the one or more processors, an entry within a chunk-reference table based on the identified one or more incremental changes; altering, by the one or more processors, a reference count for the one or more identified data chunks within a reference-count table based on the chunk-reference table; and identifying, by the one or more processors, whether any entry within the reference-count table has a reference count of zero.

In still other aspects of the disclosure, the metadata for the plurality of objects further comprises a plurality of metadata inputs, and wherein identifying the one or more incremental changes in references further comprising identifying one or more incremental changes to one or more identified data chunks with respect to each of the plurality of metadata inputs.

### BRIEF DESCRIPTION OF THE DRAWINGS

Figure 1 is a block diagram of databases for object metadata in accordance with aspects of the disclosure.
Figure 2 is a block diagram of a database being altered in accordance with aspects of the disclosure.
Figure 3 is a block diagram of data reference collection and data reference counting in accordance with aspects of the disclosure.
Figure 4 is a block diagram of data reference collection and data reference counting that have been partitioned in accordance with aspects of the disclosure.

### DETAILED DESCRIPTION

Data storage systems can be designed to distribute the stored data in manners that allow for efficient management and storage of data. For example, a globally distributed binary large object (BLOB) storage system is a type of distributed storage system in which uploaded data content, or objects, are sliced into pieces, or "chunks", which can then be collected in order to reproduce the object. An object can be any data file or collection of data files, such as an image, video, audio, or user-facing data content. Data chunks can be stored within the system in a manner that allows for efficient access and maintenance of the data. For example, multiple objects within the system may reference the same data chunk.

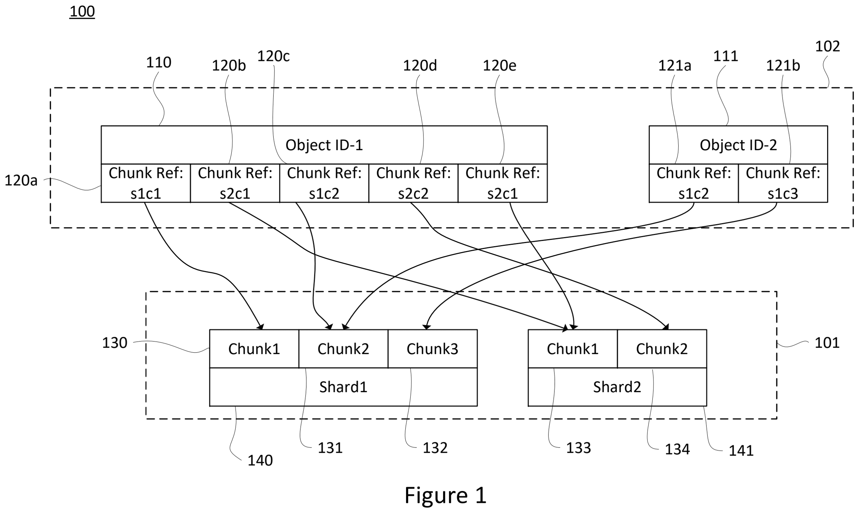

Data chunks can also be aggregated into groups, or "shards", based on attributes of the chunks. For example, a set of chunks can be aggregated together to form a shard based on the chunks being referenced by the same object or being referenced by different objects that share one or more of the same placement policies within the system. Figure 1 is a diagram 100 of a portion of a data storage system in which chunks of data, including chunks 130-134, are stored within a database 101. These chunks 130-134 are aggregated into two shards 140 and 141, with chunks 130-132 being aggregated as part of shard 140 and chunks 133, 134 being aggregated as part of shard 141.

Objects can be acquired by accessing the appropriate chunks of data within database 101. Accordingly, an object may exist within the storage system as a collection of references to data chunks within database 101. For example, the table or database 102 contains metadata for a plurality of objects, including objects 110 and 111. The metadata for each object 110, 111 contains a plurality of references to data chunks that make up the object 110, 111. For example, the metadata for object 110 in database 102 includes references 120a-e, each of which refer to a particular chunk of data that is stored within database 102, and object 110 can be acquired by accessing the chunks referred to by references 120a-e. References 120a-e may take the form of a unique chunk ID, which can be used to uniquely identify a chunk of data within database 101.

When the chunks are aggregated into shards, the unique chunk ID may take the form of a unique shard ID, along with identification of the chunk within that shard. For example, reference 120a of object 110 refers to "s1c1", which refers to the first shard and first chunk within that shard (i.e., chunk 130 of shard 140), while reference 120b refers to the second shard and the first shard within that shard (i.e., chunk 133 of shard 141). An object may contain more than one reference to a particular chunk and different objects may each make references to the same chunk. For example, the metadata for object 110 contains a reference to chunk 131, as does the metadata for object 111. Accordingly, chunk 131 within database 101 contains at least two references within the metadata of database 102.

In accordance with aspects of the disclosure, the data storage system can be configured to maintain data chunks within database 101 in a manner that allows for efficient access and storage of data. This can include deleting data chunks from a database when there are no longer any objects referencing that chunk. Accordingly, shards can be altered by removing any data chunks that have been identified as no longer being referenced by an object within the system.

In some instances, a chunk may remain immutable with respect to a given shard in which it is aggregated. However, in other instances, the system may repackage a set of chunks into a different set of shards, while maintaining the same Chunk ID. This repackaging may occur in order to reduce fragmentation of chunks within the system. In addition, this repackaging may include the identification and deletion of data chunks that are no longer referenced by any object. However, the object metadata 110, 111 within database 102 would continue to reference the same set of data chunks, even if these chunks are repackaged into a different set of shards.

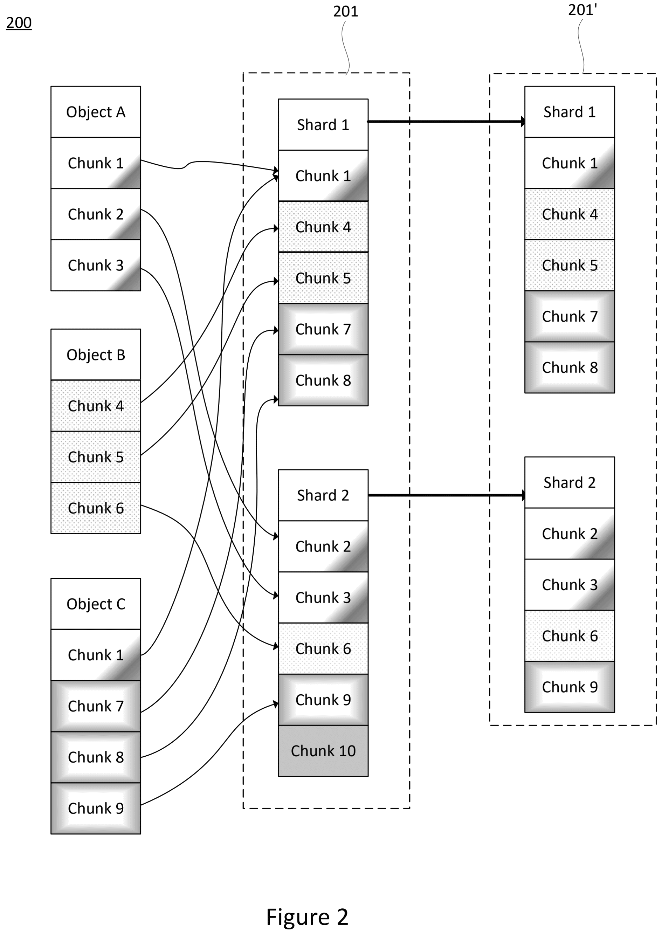

Figure 2 is a block diagram 200 of a database 201, which contains at least two shards of data chunks. In particular, database 201 contains Shard 1, which has Chunks 1, 4, 5, 7, and 8, and database 201 contains Shard 2, which has Chunks 2, 3, 6, 9, and 10. As shown in diagram 200, Objects A, B, and C each make references to chunks within Shards 1 and 2. For example, Object A contains a reference to Chunk 1 that is located within Shard 1, as well as references to Chunks 2 and 3 that are located within Shard 2. However, Chunk 10 of Shard 2 within database database 201 is not referenced by any object. Accordingly, Chunk 10 can be deleted from database 201, as it is not needed by any existing or live object.

A chunk that is currently referenced by at least one object can be referred to as a live chunk, while a chunk that is not referenced by any active object can be referred to as a dead chunk. In accordance with aspects of the disclosure, the data storage system can be configured to identify dead chunks by identifying instances in which one or more chunks within the database are no longer referred to by any existing object. Those identified chunks can be deleted from the database. In diagram 200, Chunk 10 is identified as a dead chunk and is removed from database 201, as represented by its absence from updated database 201'.

As database 201 and related object metadata grow larger, particular chunks within database 201 can be referenced by more and more objects within the system, and it can become more difficult to identify when a particular chunk is dead. The object metadata provides a one-way reference from objects, to chunks of data, but in order to determine whether a particular chunk is dead, a determination is needed to confirm that none of the objects reference that particular chunk. However, Scanning the entirety of metadata sources to identify dead chunks becomes inefficient. This is particularly true for instances in which when the system is configured to allow for chunk references to be shared in an unbounded manner.

In accordance with aspects of the disclosure, a data storage system can be configured to efficiently identify when chunks are no longer referenced by an active object. For example, the systems and methods disclosed herein allow for the identification of dead chunks to occur within partitionable layers that allow for incremental identification of back references from any given chunk of data to the set of objects.

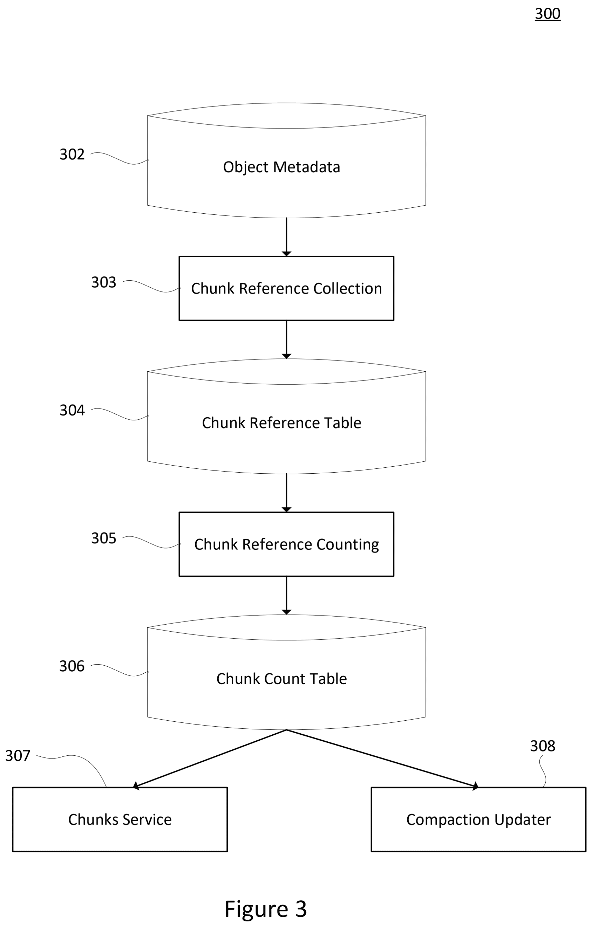

Figure 3 is a block diagram 300 in which a two-layer architecture is used to identify dead chunks within the system. Blocks within diagram 300 may include operations that are performed by one or more computing devices, such as servers, databases, or a series of networked devices. Block 302 represents object metadata, which includes identification of references from objects to a set of chunks. The references to chunks can be made based on a unique chunk ID. For example, metadata for an object may take the form of a table that includes a list of chunk IDs that are referenced by the object. In block 303, the references to chunks within the object metadata are collected, and the references are identified in a chunk reference table (block 304). The chunk reference table can include entries that identify the chunk ID for each reference, as well as a back-reference key, which identifies the location within the object metadata for which the reference to that chunk ID is made. Accordingly, each entry within the chunk reference table (block 304) can identify a back-reference for the Chunk ID, which is based on the identification of a reference to the Chunk ID by an object within the object metadata of block 302.

Block 305 is a chunk-reference counting operation in which the number of references to particular chunk IDs is determined based on the contents of the chunk reference table. The total number of references to a chunk can be maintained in a chunk count table (block 306) that includes entries for each chunk ID along with an associated count total that represents the total number of references that are currently made to that particular chunk ID. The chunk reference counting operation (block 305) identifies changes in the number of references that are made to a particular chunk ID and the count total within the chunk-count table can be increased or decreased based on the identified changes.

The chunk count table of block 306 can be accessed by one or more sub-systems, such as a chunk service subsystem (block 307) or a compaction updater subsystem (block 308). These subsystems can be configured to alter one or more databases based on changes to the chunk count table of block 306. For example, returning to Figure 2, no object references Chunk 10 within database 201. Accordingly, a chunk-count table will indicate for Chunk 10 a total count of zero. Based on this total count of zero within the chunk-count table, Chunk 10 can be deleted from database 201, as indicated within database 201'.

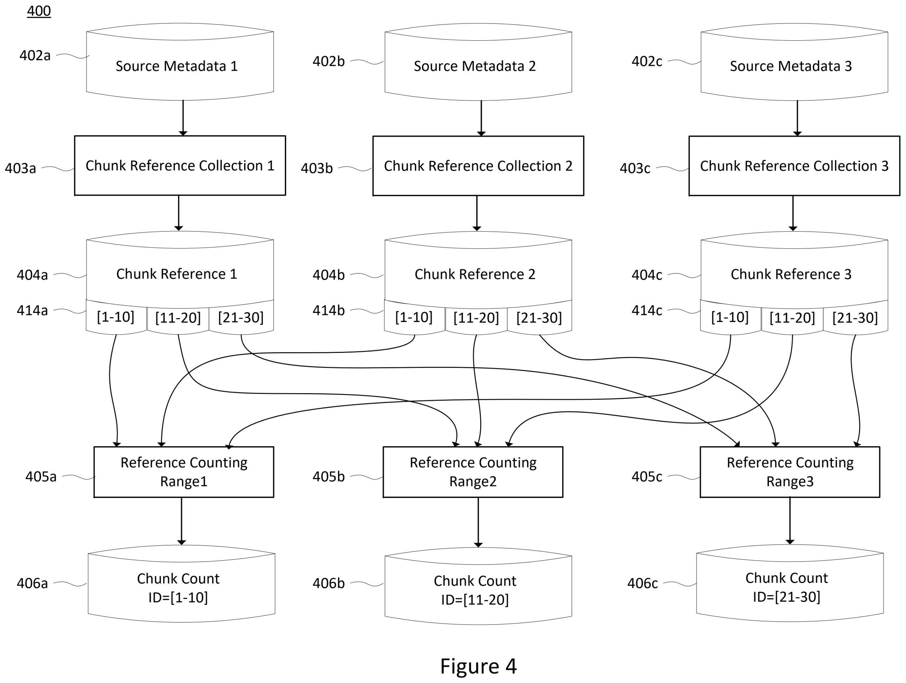

In many instances, object metadata will exist in a number of different databases and tables. In accordance with aspects of the disclosure, the chunk-reference collection and chunk-reference counting operations can be horizontally portioned while still allowing for a total reference count to be made for each unique chunk ID. For example, Figure 4 is a block diagram 400 in which object metadata is stored across multiple databases 402a-c. In blocks 403a-c, a chunk reference collection is performed for each database 402a-c, respectively, and each database 402a-c results in separate chunk reference tables 404a-c. For example, the chunk reference collection operation of block 403a identifies all of the chunk references that are made within the object metadata for database 402a, and chunk reference table 404a contains entries of chunk IDs that have been identified by the chunk reference collection operation of block 403a. Similar chunk reference tables 404b and 404c are maintained based on the chunk reference collection operations (blocks 403b and 403c) that are performed, respectively, on object metadata databases 402b and 403c.

Each chunk reference table 404a-c can be arranged and divided into chunk ID ranges 414a-c. For example, chunk reference table 404a has been arranged into three ranges 414a. These ranges may be based on an arrangement of the entries within chunk reference table 404a, which is itself based on the chunk ID of each entry. In blocks 405a-c a reference-counting operation can be performed. As shown in diagram 400, separate reference counting can be performed for each of the ranges 414a-c of each chunk-reference table 404a-c. Accordingly, reference counting for block 405a is based on Chunk ID range [1-10] from each of the chunk reference tables 404a-c, while reference counting for block 405b is based on Chunk ID range [11-20] from each of the chunk reference tables 404a-c. The reference counting operations 405a-c can then each update their respective chunk-count tables 406a-c based on the identification of total chunk references for each chunk ID over all of the chunk reference tables 404a-c. The entries for within chunk reference tables 404a-c can be sorted by Chunk IDs, so as to allow for efficient identification of chunk back-references within the partitioned set of data.

The chunk-count tables 406a-c may then be used to identify any chunk IDs for which no references have been made. These chunk IDs can be identified as dead chunks and be deleted or otherwise removed from one or more of the storage system databases. While diagram 400 shows three metadata databases 402a-c, any number of metadata sources can be used in accordance with the disclosure. In addition, any number of ranges 414a-c can be used in dividing the chunk reference tables 404a-c. For example, each chunk reference table 404a-c may be divided into four or more sets of ranges by sorting the chunk IDs of each table 404a-c into four or more separate groups. In addition, chunk reference tables 404a-c may be combined into a single reference table, which can be sorted by Chunk IDs, so as to allow for efficient identification of total reference counts with respect to each Chunk ID.

The ranges 414a-c may also be based on shard ranges for the chunks within the chunk reference tables 404a-c. For example, as discussed above, chunk IDs may include a shard ID in which the chunk resides. Accordingly, ranges 414a-c may be based on ranges of shard IDs in which the reference chunks reside.

In accordance with aspects of the disclosure, the chunk-reference collection and chunk-reference counting layers can be performed incrementally within the data storage system. For example, the operations of Figure 4 can be performed on identified changes within the set of metadata, rather than performing these operations on the entire set of metadata. The changes in metadata may be identified based on timestamps that are provided within the metadata databases 402a-c. In this instance, chunk reference collection operations 403a-c can identify timestamped metadata within databases 402a-c to determine whether any changes to objects have been made since the last chunk reference collection operation was performed.

This timestamped metadata can identify whether any object has been created, deleted, or otherwise altered since the last chunk reference collection operation, and the chunk-reference tables 404a-c and the chunk-count tables 406a-c can be updated based on these incremental changes to the metadata. Accordingly, the chunk-reference collection operation 404a-c can be configured so that for each Chunk ID entry within the chunk-reference tables 404a-c, that entry will be generated upon the creation of that reference to the chunk ID and will persist until it is determined that the reference no longer exists.

The object metadata that is provided for chunk reference collection may also take the form of a change-log, in which incremental events are identified for all of the objects within a given database, and those incremental events are provided for the chunk reference collection operation, so as to either create or delete a back reference for a particular chunk ID entry based on the incremental events. These incremental events can be provided as they occur, so that the system operates as a streaming system that identifies changes to reference counts as changes occur within the object data.

An inaccurate reference count can result in live chunks being incorrectly identified as dead, and thus being deleted. Accordingly, a verification system can be implemented in connection with the systems and methods described herein. This verification system can be split into two layers, so as to identify errors in either the reference collection operations or the reference counting operations. In addition, the verification systems can be horizontally partitioned and can be configured to perform full scans of inputs to confirm current back reference counts.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A system for database maintenance comprising:
memory having metadata for a plurality of objects that each reference one or more data chunks within a database;
one or more processors that are configured to:
identify one or more incremental changes in references to one or more identified data chunks within the metadata;
add or delete an entry within a chunk-reference table based on the identified one or more incremental changes;
alter a reference count for the one or more identified data chunks within a reference-count table based on the chunk-reference table; and
identify whether any entry within the reference-count table has a reference count of zero.

2. The system of claim 1, wherein the metadata for the plurality of objects further comprises a plurality of metadata inputs, and wherein the one or more processors are further configured to identify one or more incremental changes in references to one or more identified data chunks with respect to each of the plurality of metadata inputs.

3. The system of claim 2, wherein the chunk-reference table further comprises a plurality of chunk-reference tables, and wherein each of the plurality of chunk-reference tables contains entries relating to one of the plurality of metadata inputs.

4. The system of claim 3,
wherein the reference-count table further comprises a plurality of reference-count tables, and wherein each of the reference-count tables corresponds to a predetermined range of entries within each of the plurality of chunk-reference tables,
wherein, optionally, the predetermined range of entries is based on Chunk IDs associated with each of the data chunks.

5. The system of one of claims 1 to 4, wherein the data chunks are aggregated into data groups, and wherein each data chunk is assigned a Chunk ID based at least in part on the data group in which the data chunk is aggregated.

6. The system of one of claims 1 to 5, wherein the one or more processors are further configured to provide a command to delete one or more identified data chunks from one or more databases based on determining that the one or more identified data chunks have a reference count of zero.

7. The system of one of claims 1 to 6,
wherein the one or more incremental changes in references are based at least in part on timestamped changes to one or more objects, and/or
wherein the metadata includes a change-log for the plurality of objects.

8. The system of one of claims 1 to 7, wherein the one or more processors are further configured to update one or more data groups of one or more data chunks based at least in part on the reference count for the one or more identified data chunks.

9. A method for database maintenance comprising:
accessing, by one or more processors, a memory having metadata for a plurality of objects that each reference one or more data chunks within a database;
identifying, but the one more processors, one or more incremental changes in references to one or more identified data chunks within the metadata;
adding or deleting, by the one or more processors, an entry within a chunk-reference table based on the identified one or more incremental changes;
altering, by the one or more processors, a reference count for the one or more identified data chunks within a reference-count table based on the chunk-reference table; and
identifying, by the one or more processors, whether any entry within the reference-count table has a reference count of zero.

10. The method of claim 9, wherein the metadata for the plurality of objects further comprises a plurality of metadata inputs, and wherein identifying the one or more incremental changes in references further comprising identifying one or more incremental changes to one or more identified data chunks with respect to each of the plurality of metadata inputs.

11. The method of claim 10, wherein the chunk-reference table further comprises a plurality of chunk-reference tables, and wherein each of the plurality of chunk-reference tables contains entries relating to one of the plurality of metadata inputs.

12. The method of claim 11,
wherein the reference-count table further comprises a plurality of reference-count tables, and wherein each of the reference-count tables corresponds to a predetermined range of entries within each of the plurality of chunk-reference tables;
wherein the predetermined range of entries is based on Chunk IDs associated with each of the data chunks.

13. The method of one of claim 9 to 11, wherein the data chunks are aggregated into data groups, and wherein each data chunk is assigned a Chunk ID based at least in part on the data group in which the data chunk is aggregated.

14. The method of one of claim 9 to 13, further comprising providing, by the one or more processors, a command to delete one or more identified data chunks from one or more databases based on determining that the one or more identified data chunks have a reference count of zero.

15. The method of one of claims 9 to 14,
wherein the one or more incremental changes in references are based at least in part on timestamped changes to one or more objects; and/or
wherein the metadata includes a change-log for the plurality of objects, and/or
further comprising updating one or more data groups of the one or more data chunks based at least in part on the reference count for the one or more identified data chunks.
